# EUROPÄISCHE PATENTSCHRIFT

(11) **EP 4 105 151 B1**
(45) Veröffentlichungstag und Bekanntmachung des Hinweises auf die Patenterteilung: **26.02.2025**
(21) Anmeldenummer: 22175420.3
(22) Anmeldetag: 25.05.2022
(51) Int. Cl.: B65G 17/08, B65G 17/40

(54) **SCHARNIERBANDFÖRDERER MIT POSITIONIERBAREN SCHARNIERAUGEN**
HINGE BELT CONVEYOR WITH POSITIONABLE HINGE EYES
TRANSPORTEUR À BANDE CHARNIÈRE POURVU D' ILLETS DE CHARNIÈRE POUVANT ÊTRE POSITIONNÉS

(30) Priorität: 16.06.2021 DE 102021115518
(43) Veröffentlichungstag der Anmeldung: 21.12.2022
(73) Patentinhaber: Kabelschlepp GmbH - Hünsborn, 57482 Wenden-Hünsborn (DE)
(72) Erfinder: Diebel, Michael, 35687 Dillenburg (DE); Müller, Roland, 57076 Siegen (DE)
(74) Vertreter: Neumann, Ditmar

(56) Entgegenhaltungen:
- EP-A2- 0 212 189
- DE-B3- 102020 105 415

## Beschreibung

Der Gegenstand der Erfindung bezieht sich auf einen Scharnierbandförderer mit einem endlosen Scharnierband, wobei das Scharnierband durch gelenkig miteinander verbundene Glieder gebildet ist. Jedes Glied weist versetzt zueinander angeordnete Scharnieraugen auf.

Scharnierbandförderer werden überwiegend in Verbindung mit Werkzeugmaschinen verwendet. Hierbei können Scharnierbandförderer als Einzelförderer an Werkzeugmaschinen oder als verkettete Fördersysteme eingesetzt werden.

Ein Scharnierbandförderer kann zur Entsorgung der an der Werkzeugmaschine entstandenen Späne, Butzen oder Nippel dienen. In einem solchen Fall ist ein Scharnierbandförderer Teil eines Späneentsorgungs- und Rohstoffrückgewinnungssystems.

Der Scharnierbandförderer weist ein Scharnierband auf, welches mit einer Antriebsvorrichtung verbunden ist. Durch das endlos umlaufende Scharnierband werden Rohstoffreste abtransportiert. Die das Scharnierband bildenden Glieder werden aus Metall hergestellt. Durch die Druckschrift DE 202 006 001 016 U1 ist ein Scharnierband bekannt, bei dem die Glieder aus Metall bestehen. Ein Glied umfasst eine Platte, an der Scharnieraugen angeschweißt sind.

Es ist auch bekannt, dass ein Glied eines Scharnierbands aus einem Blechteil hergestellt wird. Es wird zunächst eine Platte mit Laschen ausgebildet, wobei anschließend die Scharnieraugen durch Roll-Umformung der Laschen gebildet werden.

Die einzelnen Glieder werden so zueinander angeordnet, dass ein Bolzen durch die Scharnieraugen zweier benachbarter Glieder hindurchgeführt wird. Die Bolzen weisen Endbereiche auf, die mit einer Hohlbolzenkette verbunden sind.

Problematisch bei einer solchen Ausgestaltung eines Scharnierbands ist, dass durch herstellungsbedingte Toleranzen der Platten und somit auch der Scharnieraugen eine relativ große Spaltmasse zwischen benachbarten Scharnieraugen entsteht.

Bei sehr kleinteiligem Fördergut wie z. B. Stanzabfällen besteht das Problem, dass dieses Fördergut in die Spalte zwischen die Scharnieraugen gelangen kann. Da das Scharnierband zwei Umlenkbereiche aufweist, müssen die Glieder in den Umlenkbereichen gegeneinander verschwenkt werden. Der Verschwenkvorgang wird durch die sich zwischen den Scharnieraugen in den Spalten befindenden Stanzabfälle oder dergleichen erschwert und somit die Funktionalität des Scharnierbandförderers beeinträchtigt.

Durch die Druckschrift DE 10 2020 105 415 B3, welche die Merkmale des Oberbegriffs des Anspruchs 1 offenbart, ist ein Scharnierband bekannt, welches durch Glieder gebildet ist. Die einzelnen Glieder sind mehrteilig ausgebildet. Ein jedes Glied weist ein Proflschiene auf, die mit Mitnehmerelementen rastend verbunden ist. Die Mitnehmerelemente weisen Scharnieraugen auf, durch die sich jeweils eine Achse erstreckt.

Durch eine gattungsfremde Druckschrift EP 0 212 189 A2 ist eine Gliederbandabdeckung für Führungsbahnen, Antriebsaggregate und unfallträchtige Konstruktionsteile an Werkzeugmaschinen mit einzelnen, in einer Ebene gereihten, starren Platten, welche an ihren benachbarten Längsseiten gelenkig miteinander verbunden sind bekannt. Die Platten sind an ihren Längsseiten mit offenen und am Boden hinterschnittenen Nuten versehen. In jeder Nut sind im Abstand voneinander Scharnieraugen verankert, die fluchtend ineinandergreifen und auf einer die Platten verbindenden Gelenkachse angeordnet sind.

Alternativ zu einem Scharnierbandförderer werden sogenannte Gurtbandförderer verwendet. Das Scharnierband wird hier durch ein Gurtband ersetzt. Ein solches Gurtband besteht aus Kunststoff. Die Temperaturbeständigkeit ist hierbei häufig eingeschränkt. Fallen bspw. Späne, die heiß sind, auf das Gurtband, kann es zu Beschädigungen der Oberfläche des Gurtbands kommen. Ein weiteres Problem bei derartigen Gurtbändern ist, dass die Umlenktrommeln, um die das Gurtband läuft, sehr präzise ausgerichtet sein müssen.

Bei ungünstigen Längen-Breiten-Verhältnissen eines Gurtbands ist es daher sehr aufwendig, das Gurtband in seiner Position zu halten. Des Weiteren kann es notwendig sein, eine flächige Auflage bereitzustellen, auf der das Gurtband wenigstens teilweise läuft.

Hiervon ausgehend liegt der vorliegenden Erfindung die Zielsetzung zugrunde, einen Scharnierbandförderer bereitzustellen, dessen Scharnierband einem geringeren Verschleiß unterliegt.

Diese Aufgabe wird mit einem Scharnierbandförderer mit den Merkmalen des Anspruchs 1 gelöst. Weitere vorteilhafte Ausgestaltungen sind in den jeweils abhängig formulierten Patentansprüchen angegeben. Die in den Patentansprüchen einzeln aufgeführten Merkmale sind in beliebiger, technologisch sinnvoller Weise miteinander kombinierbar und können durch erläuternde Sachverhalte aus der Beschreibung ergänzt werden, wobei weitere Ausführungsvarianten der Erfindung aufgezeigt werden.

Der erfindungsgemäße Scharnierbandförderer weist ein endlos umlaufendes Scharnierband auf. Das Scharnierband wird mittels einer Antriebseinrichtung bewegt. Das Scharnierband ist durch gelenkig miteinander verbundene Glieder gebildet. Jedes Glied weist versetzt zueinander angeordnete Scharnieraugen auf. Die Scharnieraugen sind formschlüssig mit dem Glied verbunden. Durch diese erfindungsgemäße Ausgestaltung eines Scharnierbandförderers können wesentlich engere Fertigungstoleranzen realisiert werden. Dadurch, dass die Fertigungstoleranzen des Glieds sowie der Scharnieraugen geringer sind, werden auch die zwischen den Augen benachbarter Glieder vorhandene Spalten in ihrer Breite verringert werden, so dass der Einsatz- und Anwendungsbereich des Scharnierbandförderers gemäß der Erfindung erweitert werden kann. Ein derart ausgebildeter Scharnierbandförderer kann somit auch bspw. einen Gurtförderer ersetzen, wenn es um den Abtransport von kleinen Spänen oder kleinen Rohstoffresten geht.

Dadurch, dass das Glied und die Scharnieraugen als separate Bauteile ausgebildet sind, können diese auch aus unterschiedlichen Werkstoffen hergestellt sein. So kann das Glied an die Transportaufgabe erfolgen. Das Glied kann bspw. aus einem hochtemperaturbeständigen Werkstoff bestehen. Alternativ kann es auch aus Metall, Kunststoff, Alu oder einem anderen Werkstoff hergestellt sein.

Entsprechendes gilt auch für die Scharnieraugen. Hierbei kann auch eine Anpassung der Scharnieraugen an die Achse angepasst ein. Da zwischen den Scharnieraugen und der jeweiligen Achse eine Schwenkbewegung stattfindet, kann das Scharnierauge eine Buchse aufweisen, welche aus einem an den Werkstoff der Achse angepassten Werkstoff besteht. So kann die Buchse bspw. aus einer Messinglegierung hergestellt sein.

Der erfindungsgemäße Scharnierbandförderer zeichnet sich auch dadurch aus, dass in jedem Längsbereich eines Glieds Aufnahmen vorgesehen sind und jedes Scharnierauge einen Fortsatz mit einer geometrischen Struktur komplementär zur Aufnahme aufweist. Der Längsbereich des Glieds ist dahingehend zu verstehen, dass es sich um eine Erstreckung des Glieds quer zur Transportrichtung des Scharnierbands handelt. Die Aufnahme erstreckt sich hierbei vorzugsweise über die gesamte Länge des Glieds. Bei der Montage des Scharnierbandförderers werden die Scharnieraugen, die einen Fortsatz mit einer geometrischen Struktur aufweisen, die komplementär zu der Aufnahme ist, in die Aufnahme eingebracht und zunächst so positioniert, dass ein benachbartes Glied mit entsprechend angeordneten Scharnieraugen miteinander so ausgerichtet sind, dass eine Achse durch die Scharnieraugen hindurchgeführt werden kann. Die Scharnieraugen zweier benachbarter Glieder werden durch geeignete Maßnahmen so zueinander entlang der Achse positioniert, dass ein minimaler Spalt zwischen benachbarten Scharnieraugen der zwei benachbarten Glieder entsteht. Dadurch wird die Möglichkeit geschaffen, die Spaltbreite zwischen den Scharnieraugen zweier benachbarter Glieder auf das notwendige Maß zu reduzieren. Die Scharnieraugen werden in ihrer Position fixiert. Der Vorteil einer solchen Ausgestaltung des Scharnierbandförderers kann auch darin gesehen werden, dass auch Fertigungstoleranzen des Glieds sowie der Scharnieraugen hierdurch weiter kompensiert werden können.

Die sich in Längsrichtung des Glieds erstreckenden Aufnahmen sind vorzugsweise durch eine Nut gebildet. Das Glied kann hierbei in Form eines Profils als Halbfabrikat hergestellt werden, das die notwendige Nut bereits aufweist. Durch eine entsprechende Ablängung des Halbfabrikats wird ein Glied bereitgestellt.

Der Vorteil einer solchen Ausgestaltung kann auch darin gesehen werden, dass durch eine Variation der Anzahl der Scharnieraugen die Steifigkeit des Scharnierbands beeinflusst werden kann. Ein weiterer Vorteil des erfindungsgemäßen Scharnierbandförderers ist, dass die Herstellung eines Scharnierbandförderers mit unterschiedlichen Breiten des Scharnierbands einfacher erreicht werden kann.

Gemäß einer weiteren vorteilhaften Ausgestaltung des Scharnierbandförderers wird vorgeschlagen, dass jeder Längsbereich des Glieds jeweils eine Ausnehmung aufweist, in die die Scharnieraugen teilweise hineinragen. Vorzugsweise weisen die Scharnieraugen einen im Wesentlichen kreisförmigen Querschnitt unterhalb des Fortsatzes auf. Die Ausnehmungen in den Längsbereichen haben eine kreisbogenförmige Gestalt, die an die Außenform der Scharnieraugen angepasst ist.

Insbesondere wird vorgeschlagen, dass das Scharnierband in einer gestreckten Lage eine im Wesentlichen ebene Ablagefläche aufweist. Hierdurch wird insbesondere eine gleichmäßige Verteilung der auf das Scharnierband auftreffenden Rohstoffreste erreicht.

Gemäß einer noch weiteren vorteilhaften Ausgestaltung des Scharnierbands wird vorgeschlagen, dass jedes Glied eine Oberseite und eine Unterseite aufweist, wobei wenigstens ein Glied wenigstens ein mit der Oberseite verbundenes Ablageelement aufweist. Das Ablageelement kann unterschiedliche Funktionen übernehmen, so kann es bspw. als ein Versteifungselement ausgebildet sein. Das Ablageelement auf der Oberseite des Scharnierbands kann auch die Funktion eines Mitnehmers haben. Alternativ oder zusätzlich kann das Ablageelement eine Schutzfunktion haben. So kann bspw. das Ablageelement aus einem weichen, rutschfesten oder stoßfesten Material bestehen. Das Ablageelement kann sich auch über die gesamte Fläche der Oberseite des Scharnierbands erstrecken.

In Abhängigkeit von der Länge des Scharnierbands und dem damit verbundenen Eigengewicht des Scharnierbands sowie von dem Gewicht des Materials, das auf das Scharnierband abgelegt wird, treten in den Bereichen der gelenkigen Verbindungen der Glieder und somit auch auf die Achsen eines Obertrums des Scharnierbands relativ hohe Kräfte auf. Zur Verringerung der Belastungen im Gelenkbereich des Obertrums wird nach einer weiteren vorteilhaften Weiterbildung des Scharnierbands vorgeschlagen, dass wenigstens einige Glieder wenigstens ein mit der Unterseite des jeweiligen Glieds verbundenes Auflageelement aufweist. Das Auflageelement liegt vorzugsweise auf einer entsprechenden Schiene auf, so dass ein Durchhang des Gliederbands vermieden wird. Des Weiteren wird eine Belastung der formschlüssigen Verbindungen zwischen den Scharnieraugen und den Gliedern zumindest reduziert.

Das wenigstens eine Auflageelement und/oder das wenigstens eine Ablageelement ist mit der Oberseite bzw. Unterseite verbunden. Es wird vorgeschlagen, dass die Oberseite und/oder die Unterseite eine Rille aufweist, in welche ein solches Auflageelement bzw. Ablageelement eingebracht werden kann. Die Verbindung kann dabei form- und/oder kraftschlüssig sein.

Das Glied kann aus einem Profil hergestellt werden. Zur Erhöhung der Steifigkeit ist es vorteilhaft, wenn das Glied durch zwei zueinander beabstandete Platten gebildet ist. Die Platten können z. B. durch Verpressen oder Verschrauben miteinander verbunden sein. Es besteht auch die Möglichkeit, dass die Fortsätze der Scharnieraugen und die hierzu korrespondierend ausgebildeten Ausnehmungen in den Platten so ausgestaltet sind, dass die Platten vermittels der Scharnieraugen miteinander verbunden werden. Es ist nicht zwingend, dass die Platten aus dem gleichen Werkstoff hergestellt sind. So kann eine Oberplatte, die die Oberseite des Scharnierbands bildet, aus einem anderen Werkstoff hergestellt sein als die Platte, die dieser Platte gegenüberliegt. Die Platte, die die Unterseite bildet, kann die Funktion einer Versteifung für die Glieder übernehmen. So kann die Platte entsprechende Längsrippen aufweisen, die zur Abstützung der oberen Platte dienen.

Weitere Vorteile und Einzelheiten der Erfindung werden anhand der in der Zeichnung dargestellten Ausführungsbeispiele erläutert, ohne dass der Gegenstand der Erfindung auf das konkrete Ausführungsbeispiel beschränkt wird.

Es zeigen:
- Fig. 1:: schematisch ein Ausführungsbeispiel eines Scharnierbandförderers,
- Fig. 2:: einen Abschnitt einer perspektivischen Ansicht eines Scharnierbands,
- Fig. 3:: ein Ausführungsbeispiel eines Scharnierauges des Scharnierbands nach Fig. 2,
- Fig. 4:: eine Platte eines Glieds des Scharnierbands nach Fig. 2,
- Fig. 5:.: ein zweites Ausführungsbeispiel eines Glieds,
- Fig. 6:: ein drittes Ausführungsbeispiel eines Glieds,
- Fig. 7:: ein viertes Ausführungsbeispiel eines Glieds,
- Fig. 8:: vergrößert einen Ausschnitt des Glieds nach Fig. 7,
- Fig. 9:: vergrößert einen weiteren Ausschnitt des Glieds nach Fig. 7,
- Fig. 10:: ein weiteres Ausführungsbeispiel eines Scharnierbands.
- Fig. 11:: ein weiteres Ausführungsbeispiel eines Scharnierbands,
- Fig. 12:: ein weiteres Ausführungsbeispiel eines Scharnierbands,
- Fig. 13:: ein weiteres Ausführungsbeispiel eines Scharnierbands,
- Fig. 14:: ein weiteres Ausführungsbeispiel eines Scharnierbandes
- Fig. 15:: ein Ausführungsbeispiel eines Scharnierbands mit einem Antriebsrad und
- Fig. 16:: ein Scharnierband mit Antriebsrad und Führung.

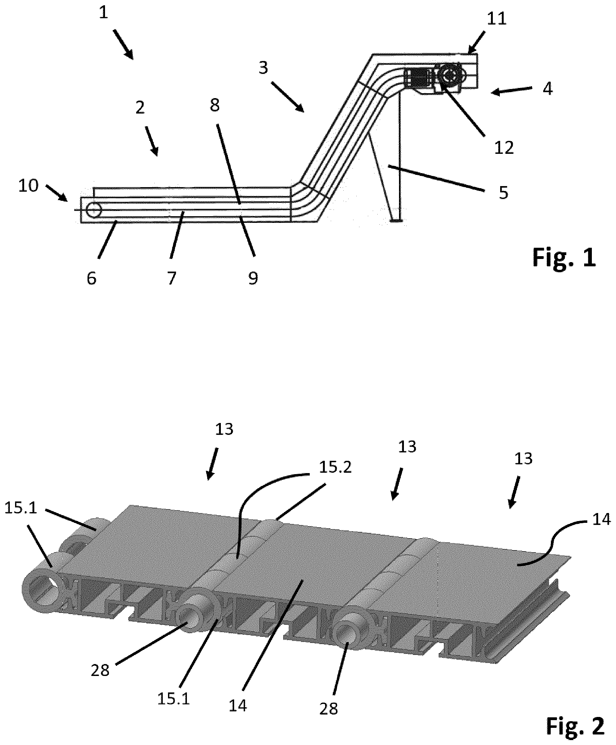

Fig. 1 zeigt schematisch in einer Seitenansicht einen Scharnierbandförderer 1. In dem dargestellten Ausführungsbeispiel weist der Scharnierbandförderer einen im Wesentlichen horizontal angeordneten Aufgabebereich 2 auf. Der Aufgabebereich 2 geht in einem Steigungsbereich 3 über. Der Steigungswinkel ist mit dem Bezugszeichen α versehen. Der Steigungsbereich 3 geht in dem dargestellten Ausführungsbeispiel einen im Wesentlichen horizontal verlaufenden Abwurfbereich 4 über. Der Steigungsbereich 3 und der Abwurfbereich 4 sind durch ein Gestell 5 gehalten.

Innerhalb eines Gehäuses 6 ist ein Scharnierband 7 angeordnet, welches in dem in der Fig. 1 dargestellten Ausführungsbeispiel gestrichelt dargestellt ist. Das Scharnierband 7 weist einen Obertrum 8 und einen Untertrum 9 auf. Mit dem Bezugszeichen 10 ist ein Umlenkbereich im Aufgabebereich 2 bezeichnet. Ein entsprechender Umlenkbereich 11 ist im Abwurfbereich 4 vorgesehen. Im Umlenkbereich 11 ist eine Antriebseinrichtung 12 angeordnet. Bei der Antriebseinrichtung 12 handelt es sich um einen Elektromotor, der mittelbar oder unmittelbar mit einem Antriebsrad zum Antrieb des Scharnierbandförderers verbunden ist. Die in der Fig. 1 dargestellte Bauform des Scharnierbandförderers 1 ist beispielhaft. So kann der Scharnierbandförderer eine gerade Bauform oder eine gerade und steigende Bauform haben.

Auf den Aufgabebereich 2 werden nicht dargestellte Teile, bei denen es sich bspw. um Späne handelt, auf das Scharnierband 7 aufgegeben. Die Späne oder allgemein gesprochen Rohstoffreste werden zu dem Abwurfbereich 4 gefördert, von wo aus sie bspw. in einen nicht dargestellten Rohstoffcontainer abgeworfen werden.

In der Fig. 2 ist perspektivisch ein Abschnitt eines Scharnierbands 7 dargestellt. Der Übersichtlichkeit wegen sind die sich durch das Scharnierauge erstreckende Achsen nicht dargestellt. Das Scharnierband 7 ist durch gelenkig miteinander verbundene Glieder 13 gebildet. Jedes Glied 13 umfasst in dem dargestellten Ausführungsbeispiel eine Platte 14 und Scharnieraugen 15.1, 15.2. Die Scharnieraugen 15.1, 15.2 sind an den Längsrändern der Platten 14 angeordnet. Die Längsränder der Platten 14 erstrecken sich quer zur Transportrichtung des Scharnierbandförderers. Die Scharnieraugen 15.1, 15.2 sind versetzt zueinander angeordnet, so dass bei der Verbindung zweier benachbarter Glieder die Scharnieraugen 15.1, 15.2 miteinander abwechseln.

Aus dem in der Fig. 2 dargestellten Ausführungsbeispiel ist ersichtlich, dass jeweils zwei Scharnieraugen 15.1 bzw. 15.2 vorgesehen sind. Dies ist eine bevorzugte Ausführungsform. Es besteht jedoch auch die Möglichkeit, dass an einem Längsrand jeweils ein Scharnierauge oder mehr als zwei Scharnieraugen angeordnet sind. Über die Anzahl der Scharnieraugen kann die Steifigkeit des Glieds 13 und somit auch die Steifigkeit des Scharnierbands 7 hinsichtlich Torsion und Biegung beeinflusst werden.

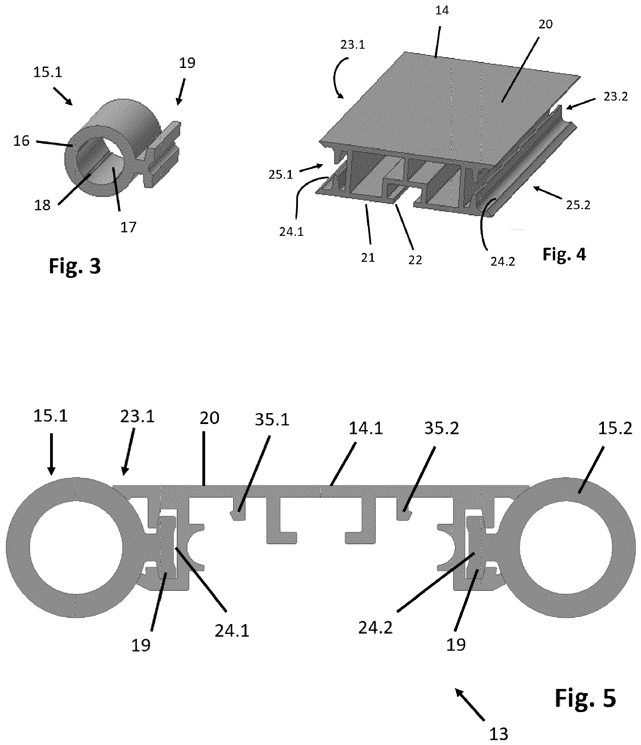

In der Fig. 3 ist vergrößert ein Scharnierauge 15.1 dargestellt. Die Scharnieraugen 15.1, 15.2 sind bevorzugt identisch ausgebildet, so dass lediglich eine Form bzw. Gestalt von Scharnieraugen zur Ausbildung des Scharnierbands ausreichend ist.

Das Scharnierauge 15.1 weist in dem in der Fig. 3 dargestellten Ausführungsbeispiel einen Grundkörper 16 auf. Der Grundkörper 16 ist in dem dargestellten Ausführungsbeispiel im Querschnitt im Wesentlichen kreisförmig ausgebildet. Der Grundkörper 16 weist ein kreisförmiges Durchgangsloch 17 auf, durch das sich einen nicht dargestellte Achse hindurch erstreckt. In der Mantelfläche des Durchgangslochs 17 kann eine Schmiernut 18 vorgesehen sein, durch welche ein Schmiermittel eingebracht ist oder werden kann, um die Reibung zwischen dem Scharnierauge 15.1 und einer nicht dargestellten Achse zu verringern.

An der Außenmantelfläche des Grundkörpers 16 ist ein Fortsatz 19 ausgebildet. In dem dargestellten Ausführungsbeispiel weist der Fortsatz 19 einen im Wesentlichen T-förmigen Querschnitt auf. Der Fortsatz 19 erstreckt sich in Längsrichtung des Scharnierauges 15.1.

In der Fig. 4 ist eine Platte 14 dargestellt. Die Platte 14 weist eine Oberseite 20 und eine Unterseite 21 auf. In dem dargestellten Ausführungsbeispiel ist die Oberseite 20 eben ausgebildet. In der Unterseite 21 ist in dem dargestellten Ausführungsbeispiel eine Rille 22 vorgesehen. Zur Funktion der Rille 22 wird im weiteren Verlauf noch eingegangen.

Die Platte 14 weist in ihren gegenüberliegenden Längsbereichen 23.1, 23.2 jeweils eine Aufnahme 24.1, 24.2 auf. In dem dargestellten Ausführungsbeispiel weist die Aufnahme einen im Wesentlichen T-förmigen Querschnitt auf.

Das Scharnierauge 15.1 bzw. 15.2 weist einen Fortsatz 19 auf, der eine geometrische Struktur aufweist, die komplementär zu der Aufnahme 23.1 bzw. 23.2 ist. In dem dargestellten Ausführungsbeispiel sind die Aufnahmen 24.1, 24.2 geometrisch gleich ausgebildet.

Die Aufnahmen 24.1, 24.2 sind zumindest zu einer kurzen Seite der Platte 14 offen.

Zur Ausbildung des in der Fig. 2 dargestellten Abschnittes eines Scharnierbands werden die Scharnieraugen 15.1 von der kurzen Seite her in die Aufnahme 24.1 eingeschoben. Entsprechendes erfolgt mit den Scharnieraugen 15.2, die in die Aufnahme 24.2 eingebracht werden. Die Scharnieraugen werden so positioniert, dass entsprechend ausgebildete andere Glieder mit den gegenüberliegenden Scharnieraugen in die Abstände zwischen zwei benachbarten Scharnieraugen 15.1 bzw. 15.2 eingreifen können.

Aus der Darstellung nach Fig. 2 sowie vergrößert in der Fig. 4 ist ersichtlich, dass die Platte 14 einen Dicke aufweist, die kleiner ist als der Durchmesser des Grundkörpers 16. Die Längsbereiche 23.2, 23.2 weisen entsprechende Ausnehmungen 25.1, 25.2 auf, in die die Scharnieraugen 15.1, 15.2 teilweise hineinragen.

Aus der Fig. 2 ist ersichtlich, dass die Längsränder benachbarter Platten 14 mit Abstand zueinander angeordnet sind.

Die Platte 14, wie sie in der Fig. 2 bzw. Fig. 4 dargestellt ist, ist aus einem Profil gebildet. Die Länge der Platte 14 kann durch entsprechende Ablängungen des Profils variiert werden, wodurch unterschiedlich breite Scharnierbänder bereitgestellt werden können.

Die Scharnieraugen sind vorzugsweise aus einem Profil hergestellt, welches die entsprechende Innen- und Außenkontur bereits aufweist. Auch durch Ablängung bzw. Zerschneidung des Profils kann eine entsprechende Anzahl der Scharnieraugen bereitgestellt werden, die für die Herstellung des Scharnierbands notwendig ist.

Aus den Fig. 2 und 4 ist ersichtlich, dass die Platte 14 im Wesentlichen symmetrisch ausgebildet ist. Dies ist nicht zwingend notwendig. Es besteht auch die Möglichkeit, dass die Längsränder der Platten 14 auf der Oberseite nahezu aneinanderstoßen. Die Längsränder der Platte 14 an der Unterseite 21 sind entsprechend zurückgesetzt ausgebildet, so dass die Breite der Oberseite der Platte 14 größer ist als die Breite der Unterseite der Platte. Durch eine entsprechende Wahl der Breite der Unterseite 21 kann die Platte 14 an unterschiedliche Verschwenkwinkel angepasst werden. Im Bereich der Scharnierbandförderer spricht man in diesem Zusammenhang von der "Teilung".

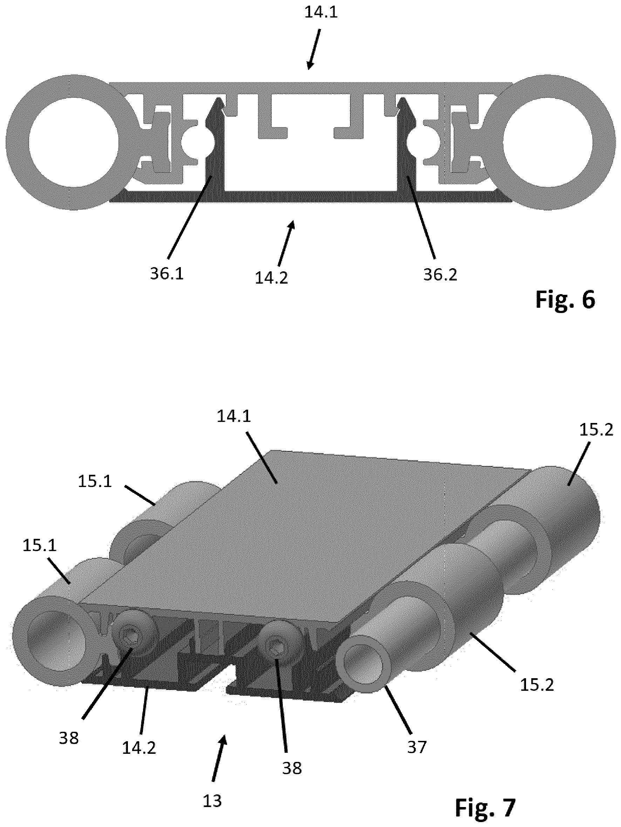

Fig. 5 zeigt ein zweites Ausführungsbeispiel eines Glieds 13. Das Glied 13 nach Fig. 5 ist durch eine Platte 14.1 gebildet. Die Platte 14.1 ist vorzugsweise als ein Extrursionsprofil ausgebildet. Die Platte 14.1 weist eine Oberseite 20 auf, die im Wesentlichen eben ist. Die Platte 14.1 weist an ihren gegenüberliegenden Längsbereichen 23.1, 23.2 jeweils eine Aufnahme 24.1, 24.2 auf. In dem dargestellten Ausführungsbeispiel hat die Aufnahme einen im Wesentlichen T-förmigen Querschnitt. Aus der Darstellung nach Fig. 5 ist ersichtlich, dass Scharnieraugen 15.1 bzw. 15.2 jeweils einen Fortsatz 19 aufweisen, wobei jeder Fortsatz eine geometrische Struktur aufweist, die komplementär zu der Aufnahme 24.1 bzw. 24.2 ist. An der Unterseite der Platte 14.1 sind mehrere Rippen vorgesehen, die nicht nur eine Versteifung der Platte 14.1 bewirken, sondern auch dazu geeignet und bestimmt sind, mit einer zweiten Platte, wie dies in der Fig. 6 dargestellt ist, verbunden zu werden.

In Abhängigkeit vom Einsatzzweck des Scharnierbands sowie von den im Betrieb herrschenden Belastungen des Glieds kann es zweckmäßig sein, zur Erhöhung der Festigkeit, und insbesondere zur Erhöhung der Biegefestigkeit und/oder Torsionsfestigkeit des Glieds nach Fig. 5, eine zweite Platte 14.2 vorzusehen, die form- und/oder kraftschlüssig mit der ersten Platte 14.1 verbunden ist. Die Verbindung kann bspw. in Form einer Schnappverbindung ausgebildet sein. Hierzu weist die Platte 14.1 in Längsrichtung sich erstreckende Rippen 35.1, 35.2 auf. Die Endbereiche, das heißt die freien Bereiche der Rippen 25.1, 25.2 sind hackenförmig ausgebildet. Aus der Fig. 6 ist ersichtlich, dass die Platte 14.2 entsprechende Verbindungrippen 36.1, 36.2 aufweist. Die Endbereiche der Verbindungsrippen 36.1, 36.2 weisen entsprechende Ausnehmungen auf, so dass die backenförmig ausgebildeten Endbereiche der Rippen 35.1, 35.2 mit diesen zusammenwirken und eine form- und kraftschlüssige Verbindung der beiden Platten 14.1, 14.2 bewirken. Zusätzlich können nicht dargestellte Verbindungsmittel vorgesehen sein, bei denen es sich bspw. um Schrauben handelt, die zur Verbindung der beiden Platten 14.1, 14.2 vorgesehen sind.

Die aus den Fig. 5 und 6 entnehmbare Variante eines Glieds ermöglicht einen modularen Aufbau eines Scharnierbands. In Abhängigkeit vom Verwendungszweck des Scharnierbandförderers und somit auch des Scharnierbands kann eine relativ leichte Konstruktion unter Verwendung eines Glieds nach Fig. 5 bereitgestellt werden. Besteht die Notwendigkeit, dass erhöhte Kräfte aufgenommen und somit auch höhere Festigkeiten erfüllt werden müssen, so kann das Glied nach Fig. 5 durch die zusätzliche Platte 14.2 versteift werden.

In der Fig. 7 ist eine weitere Ausführungsform des Glieds eines Scharnierbands dargestellt. Auch bei dem Glied in Fig. 7 handelt es sich um ein Glied, welches aus zwei gegenüberliegenden Platten 14.1 und 14.2 gebildet ist. In der Fig. 7 ist angedeutet, wie sich ein Bolzen 37 durch die Scharnieraugen 15.2 erstrecken kann. Dieser Bolzen 37 würde sich auch durch die Scharnieraugen 15.1 eines benachbarten Glieds erstrecken, wenn zwei benachbarte Glieder miteinander verbunden sind. Aus der Fig. 7 ist des Weiteren ersichtlich, dass an den kurzen Rändern der Platten 14.1, 14.2 Verbindungsmittel in Form von Schrauben 38 vorgesehen sind, die zur zusätzlichen Verbindung der beiden Platten 14.1, 14.2 vorgesehen sind.

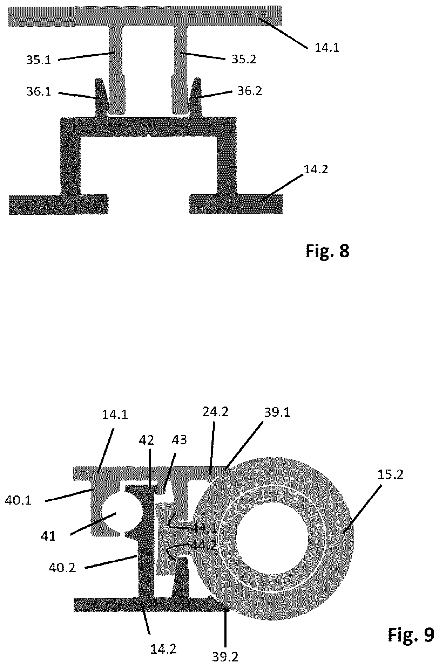

Die Platte 14.1 weist Rippen 35.1, 35.2 auf. Die Platte 14.2 weist entsprechende Verbindungsrippen 36.1, 36.2 auf. Die Verbindung der Rippen 35.1, 35.2 mit den Verbindungsrippen 36.1, 36.2 ist vergrößert in der Fig. 8 dargestellt. Aus der vergrößert dargestellten Ansicht ist ersichtlich, dass die Rippen 35.1, 35.2 an ihren freien Endbereichen mit den Verbindungsrippen 36.1, 36.2 im Wesentlichen hakenförmig ausgebildet sind, so dass eine form- und/oder kraftschlüssige Verbindung zwischen den Platten 14.1, 14.2 hergestellt werden kann. Die Rippen 35.1, 35.2 und ggf. die Verbindungsrippen 36.1, 36.2 weisen eine gewissen Flexibilität quer zur Längsrichtung der Platten auf, so dass hierdurch insbesondere eine Schnappverbindung geschaffen wird.

In der Fig. 9 ist vergrößert ein Längsbereich des Glieds 13 nach Fig. 7 dargestellt. Aus der Darstellung nach Fig. 9 ist ersichtlich, dass sowohl die Platte 14.1 als auch die Platte 14.2 im Aufnahmebereich 24.2 jeweils eine Lippe 39.1, 39.2 aufweisen. Die Lippen 39.1, 39.2 erstrecken sich über einen Teil der Dicke der Platte 14.1. Sie haben eine Außenkontur, die an die Außengeometrie der Scharnieraugen 15.1,15.2 angepasst sind. Die Lippen 39.1, 39.2 unterliegen während des Betriebs des Scharnierbands einem gewissen Verschleiß. Sie können als Verschleißindikatoren bezeichnet werden. Sind die Lippen 39.1, 39.2 verschlissen, so ist es zweckmäßig, wenn zumindest entsprechende Glieder des Scharnierbands ausgetauscht werden.

Aus der Darstellung nach Fig. 9 ist ersichtlich, dass sowohl die Platte 14.1 als auch die Platte 14.2 jeweils einen Fortsatz 40.1 und 40.2 aufweisen, die eine im Querschnitt im Wesentlichen kreisförmige Aufnahme 41 begrenzen. In diese Aufnahme 41 können die in der Fig. 7 dargestellten Schrauben 39 eingeschraubt werden, wodurch eine weitere Sicherung der Verbindung der Platten 14.1, 14.2 erreicht wird.

Durch eine entsprechende Ausgestalltung der die Aufnahme 41 begrenzenden Fortsätze 40.1 und 40.2 kann eine Anlage der Lippen 39.1 und 39.2 an die Scharnieraugen 15.1 und 15.2 beeinflußt werden. Entsprechendes gilt auch für eine form- und/oder kraftschlüssige Verbindung zweier Platten 14.1 und 14.2, wie diese beispielsweise ind der Figur 8 dargestellt sind.

Zur Begrenzung der Auslenkung des Fortsatzes 40.2 sowie zur Verbindung des Fortsatzes 40.2 mit der Platte 14.1 weist der Fortsatz 40.2 in seinem freien Endbereich eine sich im Längsrichtung des Fortsatzes erstreckende Rippe 42 auf, die form- und/oder kraftschlüssig mit einem Steg 43, der an der Platte 14.1 ausgebildet ist, herstellt. Der Steg 43 bildet gleichzeitig ein Widerlager für den Fortsatz 40.2, so dass wenn eine Schraube in die Aufnahme 40 eingeschraubt wird, der Fortsatz 40.2 ortsfest bleibt.

Aus der Fig. 9 ist des Weiteren ersichtlich, dass das Scharnierauge 15.2 einen Fortsatz 19 aufweist, der im Wesentlichen T-förmig ausgebildet ist. Der Fortsatz weist geneigte Flächen 44.1, 44.2 auf, die mit entsprechend geneigten Flächen 45.1 der Platte 14.1 und 45.2 der Platte 14.2 zusammenwirken. Hierdurch wird eine gewissen Verspannung des Scharnierauges 15.2 erreicht, so dass die Mantelfläche der Scharnieraugen 15.2 an den Lippen 39.1, 39.2 anliegen.

Die Fig. 9 zeigt die rechte Seite des Glieds nach Fig. 7. Entsprechend ist die linke Seite des Glieds ausgebildet.

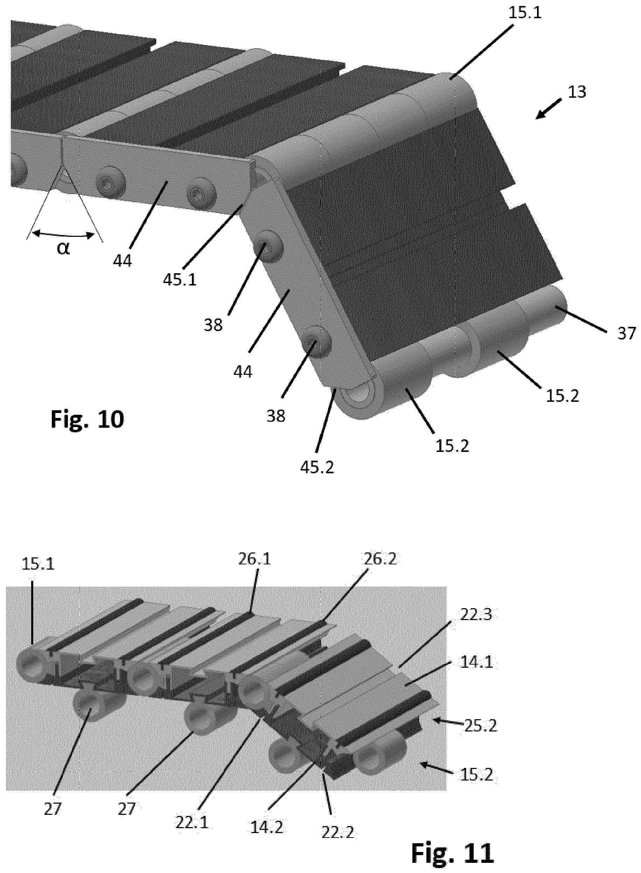

Fig. 10 zeigt einen Abschnitt eines Scharnierbandförderers, der aus Gliedern 13 nach Fig. 7 gebildet ist. Insoweit kann auf die Beschreibung der Glieder im Zusammenhang mit den Fig. 7, 8 und 9 verwiesen werden. Aus der Fig. 10 sind teilweise Bolzen 37 ersichtlich, die sich durch die Scharnieraugen 15.1, 15.2 erstrecken. Zur Fixierung der Scharnieraugen sowie der Scharnierbolzen 37 weist jedes Glied 13 an seiner jeweiligen kurzen Seite eine Anschlagplatte 44 auf, die mittels der Schrauben 38 mit dem jeweiligen Glied 13 verschraubt ist. Die Anschlagplatten 44 weisen Anschlagflächen 45.1, 45.2 auf, die einen Verschwenkwinkel α benachbarter Glieder 13 begrenzen.

In der Fig. 11 ist ein weiteres Ausführungsbeispiel eines Scharnierbandförderers dargestellt. Der prinzipielle Aufbau des Scharnierbands in der Fig. 11 entspricht im Wesentlichen dem Aufbau des Scharnierbands nach Fig. 1. Gleiche Teile sind mit gleichen Bezugszeichen versehen. Die Beschreibung zu dem Scharnierband nach den Fig. 1-4 ist auf das Ausführungsbeispiel nach Fig. 11 im Wesentlichen übertragbar. Es werden im Folgenden die Unterschiede zwischen dem Ausführungsbeispiel nach Fig. 1-4 und der Fig. 11 erläutert.

In dem der in der Fig. 11 dargestellten Ausführungsbeispiel wird das Glied 13 durch zwei Platten 14.1, 14,2 gebildet. Die Platten 14.1, 14.2 sind form- und kraftschlüssig miteinander verbunden. Die Platte 14.1 bildet die Oberseite 20. Aus der Darstellung nach Fig. 11 ist ersichtlich, dass die Platte 14.1 Rillen 22.1-22.3 aufweist. Die Rillen 22.1-22.3 verlaufen quer zur Transportrichtung des Gliederbands. Die Rillen 22.1-22-3 sind in dem dargestellten Ausführungsbeispiel parallel zueinander ausgebildet. Sie weisen den gleichen Abstand zueinander auf. Die Rillen 22.1 und 22.2 sind benachbart zu dem Längsbereich 23.1 bzw. 23.2. In der Rille 22.1 sowie der Rille 22.2 ist ein Ablageelement 26.1 bzw. 26.2 angeordnet. Das jeweilige Ablageelement 26.1 und 26.2 weist einen im Wesentlichen T-förmigen Querschnitt auf. Bei den Ablageelementen 26.1, 26.2 kann es sich um extrudierte Kunststoffprofile handeln. Die Ablageelemente 26.1, 26.2 bilden in dem dargestellten Ausführungsbeispiel Mitnehmer für das nicht dargestellte Rohstoffmaterial, welches auf dem Gliederband abgelegt wird.

Die Platten 14.1, 14.2 sind aus einem vorzugsweise extrudierten Profil hergestellt. Das Profil wird entsprechend abgelenkt. Durch die Drehung einer Platte können diese zur Ausbildung eines Glieds zusammengesetzt werden. Die Platten 14.1, 14.2 sind vorzugsweise form- und/oder kraftschlüssig miteinander verbunden.

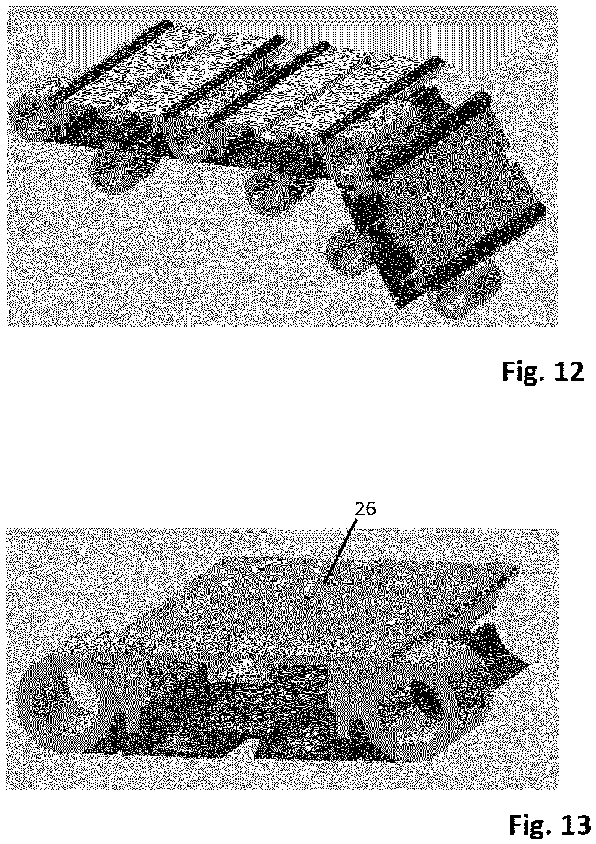

Aus der Darstellung nach Fig. 11 ist ersichtlich, dass in der Rille 22.3 der Platte 14.2 Auflageelemente 27 angeordnet sind. In dem dargestellten Ausführungsbeispiel entspricht die Geometrie der Rille 22.3 der Geometrie der Aufnahme 24.1. Die Auflageelemente 27 entsprechen geometrisch den Scharnieraugen 15.1, 15.2. Hierdurch kann ein Gliederband aus zwei Teilen hergestellt werden. Es sei an dieser Stelle auch angemerkt, dass sowohl in der Fig. 11 als auch in den nachfolgenden Fig. 12-1 der Übersichtlichkeit wegen nicht sämtliche Scharnieraugen 15.1, 15.2 dargestellt sind.

In der Fig. 11 sind die Aufnahmen 24.1, 24.2 sowie die Rille 22.3 im Wesentlichen trapezförmig ausgebildet. Diese Aufnahmen können auch als Schwalbenschwanznuten bezeichnet werden. Die Fortsätze 19 der Scharnieraugen 15.1, 15.2 sowie der Auflagen 27 weisen eine entsprechende geometrische Kontur auf. Durch das Auflagelement 27 kann eine Versteifung erreicht werden.

Fig. 12 zeigt ein weiteres Ausführungsbeispiel eines Gliederbands 1. Die Ausgestaltung des Gliederbands 1 nach Fig. 12 entspricht im Wesentlichen der Ausgestaltung des Gliederbands nach Fig. 11. Die Ausgestaltung des Gliederbands nach Fig. 12 unterscheidet sich von der Ausgestaltung des Gliederbands nach Fig. 11 dadurch, dass die Scharnieraugen 15.1 entsprechend der Ausgestaltung nach Fig. 3 verwirklicht sind. Die Scharnierplatten 14.1, 14.2 weisen entsprechende Aufnahmen auf.

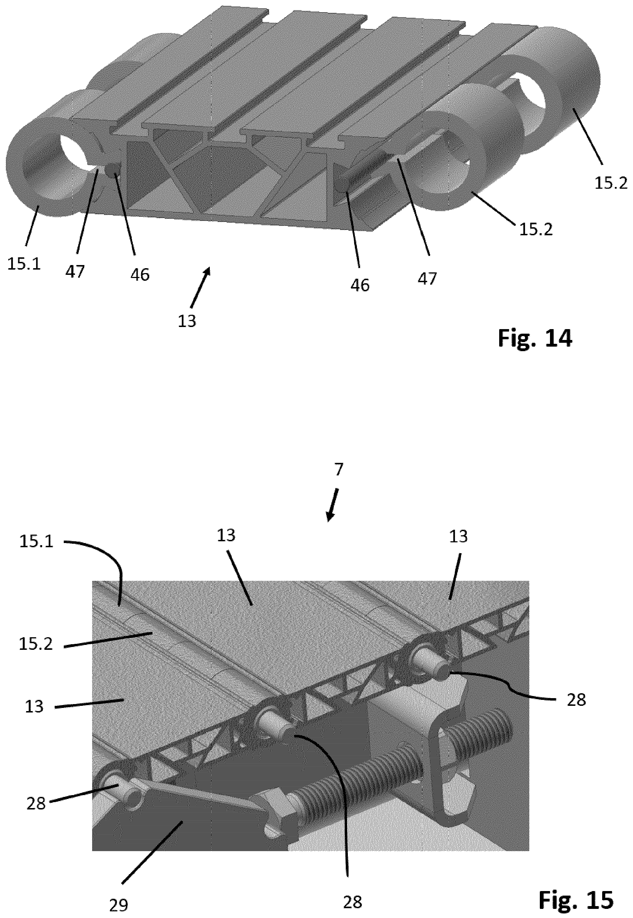

In der Fig. 14 ist ein Ausführungsbeispiel dargestellt, bei dem ein Ablageelement vorgesehen ist, welches sich im Wesentlichen über die gesamte Länge der Platte 14.1 erstreckt. Das Ablageelement 26 kann bspw. mit der Oberseite 20 der Platte 14.1 verklebt sein.

Vorstehend wurden Glieder beschrieben, bei denen diese aus zwei Platten 14.1, 14.2 gebildet sind. durch entsprechende kraft- und/oder formschlüssige Verbindung der Platten 14.1, 14.2 kann eine gewisse Fixierung der Scharnieraugen 15.1, 15.2 erreicht werden, so dass bei der Montage des Scharnierbands die Scharnieraugen 15.1 eines Glieds zwischen die Scharnieraugen 15.2 eines benachbarten Glieds eingebracht werden können. Anschließend kann entsprechend der Bolzen durch die Scharnieraugen 15.1, 15.2 zweier benachbarter Glieder hindurchgestreckt werden.

Sind die Scharnieraugen 15.1, 15.2 eines Glieds mit einer einstückigen im Sinne einer einteiligen Platte 14 verbunden, so kann es durch fertigungsbedingte Toleranzen zu einem relativ großen Spiel zwischen der Aufnahme in der Platte und dem Fortsatz der Scharnieraugen kommen, so dass es bei der Montage benachbarter Glieder zu Handhabungsschwierigkeiten kommen kann, wenn sich die Scharnieraugen verschieben. Insbesondere um dies zu vermeiden, wird vorgeschlagen, dass die Scharnieraugen 15.1, 15.2 jeweils einen sich radial erstreckenden Schlitz 47 aufweisen, wie dies aus der Fig. 14 ersichtlich ist. Der sich radial erstreckende Schlitz 47 erstreckt sich durch den Fortsatz 19 hindurch. Aus der Fig. 14 ist ersichtlich, dass ein Spreizelement 46 vorgesehen ist, das sich in axialer Richtung der Scharnieraugen 15.1, 15.2 erstreckt und hierdurch eine gewisse Spreizung des Fortsatzes 19 erreicht wird. Die Spreizung des Fortsatzes 19 bewirkt eine Fixierung der Scharnieraugen 15.2, 15.1 an der Platte 14, so dass eine Vorpositionierung der Scharnieraugen 15.1, 15.2 hinsichtlich der Platte 14 bewirkt werden kann.

In der Fig. 15 ist schematisch ein Abschnitt eines Scharnierbands 7 dargestellt. Das Scharnierband 7 ist durch Glieder 13 gebildet. Die Glieder 13 sind gelenkig miteinander verbunden.

Die Fig. 15 zeigt Achsen 28, die sich durch die Scharnieraugen 15.1, 15.2 zweier benachbarter Glieder erstrecken. Die Achsen 28 stehen seitlich, das heißt quer zur Längsrichtung des Gliederbands 7, vor. Aus der Fig. 15 ist ein Rad 29 teilweise ersichtlich, welches mit einer nicht dargestellten Antriebseinrichtung verbunden ist. Das Rad 29 hat eine Form eine Polygons. Hierbei handelt es sich um ein regelmäßiges Polygon. Die Seitenlängen des Polygons sind gleich und entsprechen dem Abstand zwischen zwei benachbarten Achsen 28. Aus der Darstellung insbesondere nach der Fig. 15 ist ersichtlich, dass das Rad Aufnahmen 30 aufweist, in die die Endabschnitte der Achsen 28 aufgenommen werden können. Durch Drehung des Rads 29 wird das Gliederband 7 bewegt.

Zur Fixierung bzw. Positionierung der Scharnieraugen 15.1, 15.2 auf einer Achse 28 können nicht dargestellte Hilfsmittel vorgesehen sein, bspw. in Form von Laschen, Anschlägen oder dergleichen, so dass die Scharnieraugen 15.1, 15.2, die sich auf einer Achse befinden, positionsgetreu im Betrieb fixiert werden können. Durch die Fixierung kann auch der Abstand zwischen den benachbarten Scharnieraugen auf einer Achse 28 eingestellt werden.

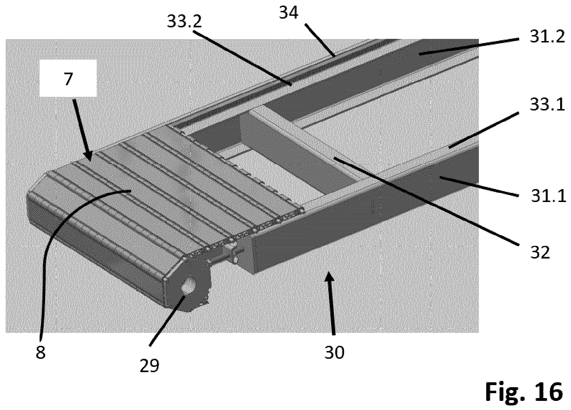

Fig. 16 zeigt einen Ausschnitt des erfindungsgemäßen Scharnierbandförderers. Aus der Fig. 16 ist ein Rahmen 30 ersichtlich. Der Rahmen 30 weist zwei in Längsrichtung des Scharnierbands angeordnete Träger 31.1, 31.2 auf. Die Träger 31.1, 31.2 sind durch Querstreben 32 miteinander verbunden. Die Träger 31.1, 31.2 weisen jeweils eine Auflagefläche 33.1, 33.2 auf, auf der ein Obertrum 8 des Scharnierbands 7 aufliegt. In dem dargestellten Ausführungsbeispiel nach Fig. 16 weist jede Auflagefläche 33.1, 33.2 jeweils eine Gleitauflage 34 auf. Der Obertrum 8 gleitet somit auf der Gleitauflage 34, wenn dieser bewegt wird. Die Gleitauflage 34 kann aus einem gleitfähigen Material bestehen. Zur Verringerung der Reibung zwischen dem Obertrum 8 und der Auflagefläche 33.1, 33.2 bzw. der Gleitauflage 34 sind die Auflageelemente 27, wie diese bspw. in der Fig. 11 dargestellt sind, vorgesehen. Durch geeignete Paarung der Gleitauflage 34 und der Auflageelemente 27 kann die Reibung zwischen dem Obertrum 8 des Gleitbands 7 verringert werden. Der Rahmen 30 bildet einen Teil des Gehäuses 6 des erfindungsgemäßen Scharnierbandförderers.

### Bezugszeichenliste

- 1: Scharnierbandförderer
- 2: Aufgabebereich
- 3: Steigungsbereich
- 4: Abwurfbereich
- 5: Gestell
- 6: Gehäuse
- 7: Scharnierband
- 8: Obertrum
- 9: Untertrum
- 10: Umlenkbereich
- 11: Umlenkbereich
- 12: Antriebseinrichtung
- 13: Glieder
- 14, 14.1, 14.2: Platte
- 15.1, 15.2: Scharnierauge
- 16: Grundkörper
- 17: Durchgangsloch
- 18: Schmiernut
- 19: Fortsatz
- 20: Oberseite
- 21: Unterseite
- 22: Rille
- 23.1, 23.2: Längsbereich
- 24.1, 24.2: Aufnahme
- 25.1, 25.2: Ausnehmung
- 26.1, 26.2: Ablageelement
- 27: Auflageelement
- 28: Achse
- 29: Rad
- 30: Rahmen
- 31.1,31.2: Träger
- 32: Querstrebe
- 33.1,33.2: Auflagefläche
- 35.1,35.2: Rippe
- 36.1,36.2: Verbindungsrippe
- 37: Bolzen
- 38: Schrauben
- 39.1,39.2: Lippe
- 40.1,40.2: Fortsatz
- 41: Aufnahme
- 42: Rippe
- 43: Steg
- 44: Anschlagplatte
- 44.1,44.2: Anschlagfläche
- 45.1,45.2: Anschlagfläche
- 46: Spreizelement
- 47: Schlitz

## Patentansprüche

1. Scharnierbandförderer mit einem endlosen Scharnierband (7), das durch gelenkig miteinander verbundene Glieder (13) gebildet ist, wobei jedes Glied (13) versetzt zueinander angeordnet Scharnieraugen (15.1, 15.2) aufweist, und mit einer mit dem Scharnierband (7) verbundenen Antriebseinrichtung (12), wobei sich jeweils eine Achse (28) durch die Scharnieraugen (15.1, 15.2) zweier benachbarter Glieder (13) erstreckt,
wobei die Scharnieraugen (15.1, 15.2) formschlüssig mit dem Glied (13) verbunden und entlang der Achse (28) positionierbar sind, wobei in jedem Längsbereich (23.1, 23.2) des Gliedes (13) Aufnahmen (24.1, 24.2) vorgesehen sind,
**dadurch gekennzeichnet, dass**
jedes Scharnierauge (15.1, 15.2) einen Fortsatz (19) mit einer geometrischen Struktur komplementär zu der Aufnahme (24.1, 24.2) aufweist.

2. Scharnierbandförderer nach Anspruch 1, wobei die Aufnahme (24.1, 24.2) durch eine Nut gebildet ist.

3. Scharnierbandförderer nach Anspruch 1 oder 2, wobei jeder Längsbereich (23.1, 23.2) des Gliedes (13) jeweils eine Ausnehmung (25.1, 25.2) aufweist, in die die Scharnieraugen (15.1, 15.2) teilweise hineinragen.

4. Scharnierbandförderer nach Anspruch 3, wobei das Scharnierband (7) in einer gestreckten Lage eine im Wesentlichen ebene Ablagefläche aufweist.

5. Scharnierbandförderer nach wenigstens einem der Ansprüche 1 bis 4, wobei jedes Glied (13) eine Oberseite (20) und eine Unterseite (21) aufweist, wobei wenigstens ein Glied (13) wenigstens ein mit der Oberseite (20) verbundenes Ablageelement (26.1, 26.2) aufweist.

6. Scharnierbandförderer nach wenigstens einem der Ansprüche 1 bis 5, wobei jedes Glied (13) eine Oberseite (20) und eine Unterseite (21) aufweist, wobei wenigstens einige Glieder (13) wenigstens ein mit der Unterseite (21) des jeweiligen Gliedes (13) verbundenes Auflageelement (27) aufweist.

7. Scharnierbandföderer nach Anspruch 6, wobei die Oberseite (20) und/oder die Unterseite (21) eine Rille (22) aufweist.

8. Scharnierbandförderer nach Anspruch 7, wobei die Rille (22) eine zum Fortsatz (19) geometrisch komplementäre Struktur aufweist.

9. Scharnierbandförderer nach wenigstens einem der Ansprüche 1 bis 7, wobei das Glied (13) durch zwei zueinander beabstandet angeordnete Platten (14.1, 14.2) gebildet ist.

10. Scharnierbandförderer nach wenigstens einem der Ansprüche 1 bis 9, wobei die Lage der Scharnieraugen (15.1, 15.2) zweier benachbarter Glieder (13) einstellbar ist.

## Claims

1. Hinged belt conveyor having an endless hinged belt (7) which is formed by links (13) connected to one another in an articulated manner, wherein each link (13) has hinge eyelets (15.1, 15.2) which are arranged offset from one another, and having a drive device (12) which is connected to the hinged belt (7), wherein a pin (28) extends through the hinge eyelets (15.1, 15.2) of two adjacent links (13) in each case,
wherein the hinge eyelets (15.1, 15.2) are connected in a form-fitting manner to the link (13) and are positionable along the pin (28), wherein receiving means (24.1, 24.2) are provided in each longitudinal region (23.1, 23.2) of the link (13),
**characterized in that** each hinge eyelet (15.1, 15.2) has an extension (19) with a geometrical structure complementary to the receiving means (24.1, 24.2).

2. Hinged belt conveyor according to Claim 1, wherein the receiving means (24.1, 24.2) is formed by a groove.

3. Hinged belt conveyor according to Claim 1 or 2, wherein each longitudinal region (23.1, 23.2) of the link (13) has a respective recess (25.1, 25.2) into which the hinge eyelets (15.1, 15.2) partially project.

4. Hinged belt conveyor according to Claim 3, wherein, in an extended position, the hinged belt (7) has a substantially planar depositing surface.

5. Hinged belt conveyor according to at least one of Claims 1 to 4, wherein each link (13) has a top side (20) and a bottom side (21), wherein at least one link (13) has at least one depositing element (26.1, 26.2) which is connected to the top side (20).

6. Hinged belt conveyor according to at least one of Claims 1 to 5, wherein each link (13) has a top side (20) and a bottom side (21), wherein at least some links (13) have at least one support element (27) which is connected to the bottom side (21) of the respective link (13).

7. Hinged belt conveyor according to Claim 6, wherein the top side (20) and/or the bottom side (21) have/has a channel (22).

8. Hinged belt conveyor according to Claim 7, wherein the channel (22) has a structure which is geometrically complementary to the extension (19).

9. Hinged belt conveyor according to at least one of Claims 1 to 7, wherein the link (13) is formed by two plates (14.1, 14.2) which are arranged spaced apart from one another.

10. Hinged belt conveyor according to at least one of Claims 1 to 9, wherein the position of the hinge eyelets (15.1, 15.2) of two adjacent links (13) is adjustable.

## Revendications

1. Convoyeur à bande charnière, comprenant une bande charnière (7) sans fin qui est formée par des maillons (13) reliés ensemble de manière articulée, dans lequel chaque maillon (13) présente des oeillets de charnière (15.1, 15.2) disposés de manière décalée les uns par rapport aux autres, et comprenant un dispositif d'entraînement (12) relié à la bande charnière (7), dans lequel respectivement un axe (28) s'étend à travers les oeillets de charnière (15.1, 15.2) de deux maillons voisins (13), dans lequel les oeillets de charnière (15.1, 15.2) sont reliés au maillon (13) par complémentarité de forme et peuvent être positionnés le long de l'axe (28), dans lequel des logements (24.1, 24.2) sont prévus dans chaque zone longitudinale (23.1, 23.2) du maillon (13),
**caractérisé en ce que** chaque oeillet de charnière (15.1, 15.2) présente un prolongement (19) d'une structure géométrique complémentaire au logement (24.1, 24.2).

2. Convoyeur à bande charnière selon la revendication 1, dans lequel le logement (24.1, 24.2) est formé par une rainure.

3. Convoyeur à bande charnière selon la revendication 1 ou 2, dans lequel chaque zone longitudinale (23.1, 23.2) du maillon (13) présente respectivement un évidement (25.1, 25.2) dans lequel les oeillets de charnière (15.1, 15.2) font saillie en partie.

4. Convoyeur à bande charnière selon la revendication 3, dans lequel la bande charnière (7) présente dans une position étirée une surface de dépose substantiellement plane.

5. Convoyeur à bande charnière selon au moins l'une des revendications 1 à 4, dans lequel chaque maillon (13) présente une face supérieure (20) et une face inférieure (21), dans lequel au moins un maillon (13) présente au moins un élément de dépose (26.1, 26.2) relié à la face supérieure (20).

6. Convoyeur à bande charnière selon au moins l'une des revendications 1 à 5, dans lequel chaque maillon (13) présente une face supérieure (20) et une face inférieure (21), dans lequel au moins certains maillons (13) présentent au moins un élément de dépose (27) relié à la face inférieure (21) du maillon respectif (13).

7. Convoyeur à bande charnière selon la revendication 6, dans lequel la face supérieure (20) et/ou la face inférieure (21) présentent un sillon (22).

8. Convoyeur à bande charnière selon la revendication 7, dans lequel le sillon (22) présente une structure géométrique complémentaire au prolongement (19).

9. Convoyeur à bande charnière selon au moins l'une des revendications 1 à 7, dans lequel le maillon (13) est formé par deux plaques (14.1, 14.2) disposées de manière espacée l'une par rapport à l'autre.

10. Convoyeur à bande charnière selon au moins l'une des revendications 1 à 9, dans lequel la position des oeillets de charnière (15.1, 15.2) de deux maillons voisins (13) est réglable.
